# EUROPÄISCHE PATENTANMELDUNG

(11) **EP 1 107 138 A1**
(43) Veröffentlichungstag der Anmeldung: **13.06.2001**
(21) Anmeldenummer: 99124424.5
(22) Anmeldetag: 07.12.1999
(51) Int. Cl.: G06F 17/30

(54) **Verfahren und Einrichtung zum Übermitteln und Ausgeben von Informationen**

(71) Anmelder: SIEMENS AKTIENGESELLSCHAFT, 80333 München (DE)
(72) Erfinder: Peter, Martin, 80333 München (DE); Siewerth, Jörg, 82024 Taufkirchen (DE)

(57) **Zusammenfassung**

Beschrieben wird ein Verfahren zum Übermitteln und Ausgeben von Informationen (3 bis 6). Hierbei werden die Informationen (3 bis 6) in Form von Informationsbausteinen (3 bis 6) in dem Informationsdatenspeicher (2) gespeichert und auf ein Abfragesignal (AS) hin an eine Ausgabeeinheit (12) übermittelt und dort ausgegeben. In einem Parameterspeicher (7) werden benutzerspezifische Auswahlparameter (AP) und Klassifizierungsparameter (KP) abgespeichert. In Abhängigkeit vom jeweiligen Typ und Inhalt der Informationsbausteine (3 bis 6) werden Informationsbausteine (3 bis 6) anhand der benutzerspezifischen Auswahlparameter (AP) zur bevorzugten Abfrage ausgewählt und anhand der benutzerspezifischen Klassifizierungsparameter (KP) untereinander in Form einer Abfragekaskade so verknüpft, daß bei einer Ausgabe eines bestimmten Informationsbausteins (3 bis 6) an der Ausgabeeinheit (12) automatisch bestimmte weitere Informationsbausteine (3 bis 6), die mit dem ausgegebenen Informationsbaustein (3 bis 6) verknüpft sind, zur Abfrage über die Ausgabeeinheit (12) angeboten werden.

## Beschreibung

Die Erfindung betrifft ein Verfahren zum Übermitteln und Ausgeben von Informationen, bei dem aus einem Informationsdatenspeicher auf ein Abfragesignal hin die Informationen an eine Ausgabeeinheit übermittelt und dort ausgegeben werden. Weiterhin betrifft die Erfindung eine Einrichtung zur Durchführung eines solchen Verfahrens.

Ein derartiges Verfahren bzw. eine entsprechende Einrichtung wird überall dort angewendet, wo aus einer Sammlung von verschiedenen Informationen bestimmte Informationen an einem Ausgabemedium, beispielsweise einem Display, einem Drucker oder auch einem Monitor ausgegeben werden sollen, wobei dem Benutzer die Möglichkeit gegeben ist, die ausgegebenen Informationen gezielt abzufragen. Das Abfragesignal wird hierzu in der Regel mittels einer Signalerzeugungseinrichtung erzeugt, welche sich in unmittelbarer Nähe zu der Ausgabeeinheit befindet oder Bestandteil der Ausgabeeinheit ist. Bei der Signalerzeugungseinrichtung kann es sich beispielsweise um eine Tastatur, einen Joystick, eine Maus oder ein ähnliches Eingabemedium aber auch um ein berührungssensitives Display oder eine Spracheingabe handeln. Typische Anwendungsbeispiele für entsprechende Einrichtungen sind Informationsausgabeterminals in Firmen, in Ausstellungen oder an Informationsständen, beispielsweise in Bahnhöfen oder Flughäfen, elektronische Zeitungen oder die Informationsabfrage über das Internet mit einem geeigneten Endgerät, beispielsweise einem Computer, sowie die Abfrage von automatischen Informationsdiensten über ein Telefon, vorzugsweise ein Mobiltelefon, wobei die Steuerung der Abfrage in der Regel über die Tastatur erfolgt.

Probleme bei solchen Informationsübermittlungs- und -ausgabesystemen entstehen vor allem dann, wenn die Gesamtmenge an Informationen, die zur Abfrage zur Verfügung stehen, immer mehr zunimmt. Vor dem Hintergrund einer stetig wachsenden Informationsflut gewinnt dann die Priorisierung und Individualisierung der Informationen zunehmend an Bedeutung, d. h. die Daten sollten so übermittelt und ausgegeben werden, daß der jeweilige Benutzer den Überblick insoweit behält, daß er die von ihm gewünschten Informationen möglichst schnell und einfach abfragen kann, ohne mit zu vielen unnötigen Informationen belastet zu werden. Hierbei ist ein geeigneter Mittelweg zwischen zwei sich konträr gegenüberstehenden Bedingungen zu wählen. Werden auf der einen Seite zu viele und zu umfangreiche Informationen übermittelt, so ist es für den Benutzer äußerst schwierig, die gewünschten Informationen herauszufinden. Andererseits kann bei einer stark vorselektierten Informationssammlung gerade das entscheidende Dokument verlorengegangen sein. Diese Problematik besteht besonders dann, wenn das gesuchte Objekt nicht eindeutig beschrieben wurde oder beschrieben werden kann. Oftmals spielen auch Randinformationen eine wichtige Rolle. In der Regel wird ein einfaches Weglassen von Informationen vom Nutzer weder gewünscht noch akzeptiert.

Bei elektronischen Zeitungen wird, um dieses Problem zu reduzieren, die Informationsausgabe so gesteuert, daß beispielsweise in einem Abfragebaum zunächst nur möglichst viele Überschriften aus den unterschiedlichsten Themenbereichen dargestellt werden. Eventuell wird noch zu der einen oder anderen Überschrift eine Kurzinformation herausgegeben. Zu den Überschriften bzw. Kurzinformationen wird in der Regel gleichzeitig angeboten, weitere Zusatzinformationen bzw. Volltexte zu erhalten. Bei einem solchen Verfahren sind die Übermittlungs- und Ausgabestrukturen jedoch fest für alle Benutzer auf gleiche Weise vorgegeben. Das heißt, jeder Benutzer bekommt die Informationsinhalte auf die gleiche Art und Weise ausgegeben und kann dann in verschiedenen Abfrage- und Ausgabeschritten zu der gewünschten Information gelangen, wobei der Aufwand für den Benutzer, die gewünschte Information zu finden, davon abhängt, inwieweit sich seine Interessen mit der fest vorgegebenen Struktur der elektronischen Zeitung decken.

Es ist Aufgabe der vorliegenden Erfindung, eine Alternative zu diesem Stand der Technik anzugeben, die eine benutzerfreundlichere Übermittlung und Ausgabe von vom Benutzer gewünschten Informationen ermöglicht.

Diese Aufgabe wird durch ein Verfahren gemäß Patentanspruch 1 und eine Einrichtung zur Durchführung dieses Verfahrens nach Patentanspruch 13 gelöst.

Bei dem erfindungsgemäßen Verfahren werden die Informationen zunächst in Form von Informationsbausteinen in dem Informationsdatenspeicher gespeichert. Die Informationsbausteine können hierbei jeweils unterschiedlichen Typen entsprechen. Beispielsweise enthält ein Typ von Informationsbausteinen nur eine Überschrift, ein weiterer Typ eine Kurznachricht bzw. eine Zusammenfassung, ein dritter Typ einen Volltext. Andere Typen von Informationsbausteinen enthalten beispielsweise nur Bilder oder zusätzliche Informationen, wie Tabellen, Musikstücke, Adreßdateien, lexikalische Hinweise, Formatvorlagen, Steuerungsprogramme bzw. Programmteile etc. Nach welchen verschiedenen Typen die Informationsbausteine gruppiert sind ist im Prinzip beliebig und kann an den Gesamtinhalt der jeweiligen Information im Informationsdatenspeicher angepaßt sein. Vorteilhafterweise besteht jedoch eine gewisse Gliederung in Form der genannten Überschriften, Zusammenfassungen, Volltexte und Zusatzinformationen, so daß zu jedem Inhaltsthema verschiedene Typen von Informationsbausteinen existieren, die Informationen über dasselbe Thema mit unterschiedlicher Genauigkeit enthalten.

Diese Informationsbausteine können entweder in einem Informationsdatenspeicher innerhalb der Einrichtung zum Übermitteln und Ausgeben der Information selber enthalten sein. Es besteht auch die Möglichkeit, daß die Einrichtung eine Empfangseinheit zum Empfang solcher Informationsbausteine von anderen Geräten enthält.

Weiterhin werden über eine entsprechende Eingabeeinrichtung vom Benutzer für ihn spezifische Auswahlparameter und Klassifizierungsparameter eingegeben und in einem dem Benutzer zugeordneten Parameterspeicher abgespeichert.

Bei den Auswahlparametern kann es sich beispielsweise um Themenvorgaben wie "Sport" oder "Politik", handeln. Es kann sich hierbei aber auch um bestimmte Schlüsselworte, z. B. Politikernamen oder gesuchte Fachbegriffe, oder um bestimmte Schlüsseleigenschaften, beispielsweise eine gesuchte Farbe in Bildern oder die Aktualität der Information, handeln. Die benutzerspezifischen Klassifizierungsparameter geben dagegen an, wie wichtig ein bestimmtes Thema bzw. ein bestimmtes Stichwort oder dergleichen ist und mit welcher Genauigkeit eine Informationsausgabe über diesen Punkt gewünscht wird.

Die benutzerspezifischen Auswahlparameter werden genutzt, um je nach Auswahlparameter in Abhängigkeit vom jeweiligen Typ und Inhalt eines Informationsbausteins genau diesen Baustein zur bevorzugten Abfrage auszuwählen. Anhand der benutzerspezifischen Klassifizierungsparameter werden die zur bevorzugten Abfrage ausgewählten Informationsbausteine ebenfalls in Abhängigkeit von Typ und Inhalt des jeweiligen Informationsbausteins untereinander in Form einer Abfragekaskade verknüpft, so daß bei einer Ausgabe eines bestimmten Informationsbausteins an der Ausgabeeinheit automatisch bestimmte weitere Informationsbausteine, die mit dem ausgegebenen Informationsbaustein verknüpft sind, zur Abfrage über die Ausgabeeinheit angeboten werden.

Von der äußeren Darstellungsform her erhält der Benutzer die Informationen, beispielsweise auf einem Monitor, wie bei einer üblichen elektronischen Zeitung o. ä. dargeboten. Das heißt, es werden beispielsweise von verschiedenen Themen nur Überschriften, von anderen Themen nur Überschriften und Kurztexte, und von wieder anderen gleich Volltexte oder Zusatzinformationen angeboten. Zu den jeweils dargestellten Informationen erhält der Benutzer die Möglichkeit, über die Signalerzeugungseinrichtung mittels eines Abfragesignals weitere Informationen zu erhalten, sofern solche weiteren Informationen existieren. Entscheidend bei dem erfindungsgemäßen Verfahren ist jedoch, daß hier über die Auswahl- und Klassifizierungsparameter vom Benutzer selber gesteuert wird, welche Informationsinhalte in welcher Form, d. h. nur als Überschrift oder gleich als Volltext, dargestellt werden und zu welchen dargestellten Informationspunkten überhaupt, und wenn ja in welcher Form Zusatzinformationen direkt angeboten werden, so daß diese auf einfache Weise abgefragt werden können. D. h. über die Wahl der Auswahl- und Klassifizierungsparameter wird für jeden Benutzer die Übermittlung, und Ausgabe so gesteuert, daß jedem Benutzer eine individuelle Menüsteuerung zur Verfügung steht, mit der er einfachen und schnellen Zugriff auf alle ihn interessierenden Informationen hat.

Selbstverständlich hat es der Benutzer in der Hand, jederzeit auch an alle anderen Informationen zu gelangen. Beispielsweise kann dies über eine Veränderung der Auswahlparameter oder Klassifizierungsparameter geschehen.

Bei einer bevorzugten Ausführungsform wird jedem Informationsbaustein eine Zugriffsadresse zugeordnet. Die Zugriffsadressen der zur bevorzugten Abfrage ausgewählten Informationsbausteine werden dann in einem benutzerspezifischen Abfragespeicher gespeichert und die entsprechenden Informationsbausteine werden dadurch untereinander verknüpft, daß ihre im Abfragespeicher gespeicherten Zugriffsadressen untereinander in Form der Abfragekaskade verknüpft werden. Dieses Verfahren hat den Vorteil, daß für jeden Benutzer die individuelle Abfragekaskade mit nur geringem Speicherplatzbedarf aufgebaut werden kann, und somit z. B. bei gleichem Speicherangebot mehr Benutzer gleichzeitig von der Einrichtung bedient werden können.

Damit der Benutzer nicht bei jeder Abfragesitzung an der Einrichtung neu seine Parameter eingeben und sein Informationswunschprofil neu spezifizieren muß, besteht im Prinzip die Möglichkeit, für jeden Benutzer den Abfragespeicher auch nach dem Beenden einer Sitzung gespeichert zu halten. Das heißt, es wird die komplette Abfragekaskade mit den Adressen gespeichert, bis der Benutzer eine weitere Abfragesitzung startet. Selbstverständlich muß, wenn sich zwischendrin die Informationsinhalte in den einzelnen Informationsbausteinen an den verschiedenen Zugriffsadressen ändern, eine Modifizierung der Zugriffsadressen bzw. der Verknüpfungen in der Abfragekaskade im Abfragespeicher vorgenommen werden. Dies kann entweder sofort bei einer Veränderung eines Informationsbausteins oder auch bei Beginn einer neuen Abfragesitzung geschehen, wobei dann die Änderungen in Abhängigkeit vom letzten Zugriffsdatum und dem Datum der Veränderungen im Informationsspeicher durchgeführt werden.

Alternativ ist es auch möglich, daß der Abfragespeicher beim Beenden jeder Sitzung gelöscht wird und beim Neubeginn einer Abfragesitzung dem Benutzer ein neuer Speicherbereich zugeordnet wird und anhand der im Parameterspeicher gespeicherten Auswahl- bzw. Klassifizierungsparameter eine neue Abfragekaskade aufgebaut wird. Es ist daher auch möglich, daß sich beispielsweise in der Ausgabeeinheit ein benutzereigener Parameterspeicher befindet und beim Beginn einer Sitzung der Speicherinhalt aus dem dortigen Parameterspeicher in einen dem Benutzer zugewiesenen Speicherbereich übertragen wird, der während der Sitzung als benutzerspezifischer Parameterspeicher dient. Bei dieser Ausführungsform wird praktisch das Filterprofil beim Benutzer selber gespeichert und der Benutzer kann bei verschiedenen Einrichtungen mit dem gleichen Filterprofil Informationen abfragen.

Bei einer weiteren bevorzugten Ausführungsform des Verfahrens sind die Auswahlparameter bzw. Klassifizierungsparameter nicht nur durch den jeweiligen Benutzer explizid eingebbar, sondern es findet auch automatisch eine Veränderung der Auswahl- und Klassifizierungsparameter während bzw. nach einer Abfragesitzung statt. Eine solche Veränderung der Auswahl- bzw. Klassifizierungsparameter kann beispielsweise in Abhängigkeit von der Häufigkeit der Abfrage bestimmter Informationsinhalte erfolgen, wobei z. B. einfach die Anzahl der Abfragen eines bestimmten Informationsinhalts während einer oder auch über mehrere Sitzungen gezählt wird. Häufig vom Benutzer angefragte Informationsinhalte erhalten dann beispielsweise einen höherwertigen Klassifizierungsparameter, so daß dem Benutzer automatisch über dieses Informationsthema bzw. im Zusammenhang mit dem bestimmten Stichwort oder anderen Schlüsseleigenschaften automatisch gleich genauere Informationen angeboten werden. Das System ist insofern quasi lernfähig.

Weitere vorteilhafte und bevorzugte Ausführungsformen der Erfindung finden sich in den übrigen Unteransprüchen und in der weiteren Beschreibung.

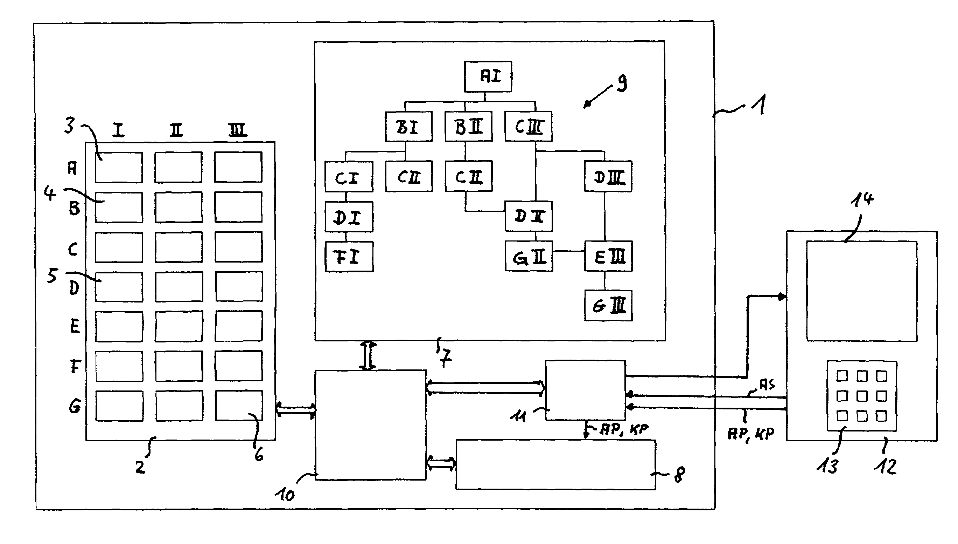

Die Erfindung wird im folgenden unter Hinweis auf die beigefügte Zeichnung anhand eines Ausführungsbeispiels näher erläutert. Die dargestellten Merkmale können nicht nur in den genannten Kombinationen, sondern auch einzeln oder in anderen Kombinationen erfindungswesentlich sein. Im übrigen wird ausdrücklich darauf hingewiesen, daß auch Merkmale, die nur in Zusammenhang mit dem erfindungsgemäßen Verfahren dargestellt sind, bezüglich der Einrichtung zur Durchführung des Verfahrens erfindungswesentlich sein können und umgekehrt.

Die einzige Figur zeigt eine schematische Darstellung der wesentlichen Komponenten der erfindungsgemäßen Einrichtung und ihr Zusammenwirken.

Die Einrichtung 1 weist einen Informationsdatenspeicher 2 auf, in dem die einzelnen "Rohinformationen" in Form von Informationsbausteinen 3 bis 6 abgespeichert sind. Anstelle oder zusätzlich zu diesem Informationsdatenspeicher 2 kann die Einrichtung 1 auch eine Schnittstelle enthalten, mit der auf einen externen Informationsdatenspeicher oder mehrere Informationsdatenspeicher zugegriffen werden kann, um von dort entsprechende Informationsbausteine zu empfangen.

Als weitere Speicher 7, 8 enthält die Einrichtung 1 unter anderem einen Parameterspeicher 8, welcher jeweils einem bestimmten Benutzer zugeordnet ist und die benutzerspezifischen Auswahlparameter AP und Klassifizierungsparameter KP enthält, sowie einen dem jeweiligen Benutzer zugeordneten Abfragespeicher 7, in dem von bestimmten ausgewählten Informationsbausteinen 3 bis 6 aus dem Informationsdatenspeicher 2 die Zugriffsadressen AI bis GIII abgespeichert und dort untereinander in Form einer Abfragekaskade 9 verknüpft sind.

Der Einfachheit halber sind in der Figur nur ein Parameterspeicher 8 und ein Abfragespeicher 7 dargestellt. Selbstverständlich enthält die Einrichtung 1 in der Regel eine Vielzahl solcher Speicher 7, 8 entsprechend der Anzahl der möglichen Benutzer. Der Informationsdatenspeicher 2 ist dagegen für alle Benutzer gleich.

Sämtliche Speicher 2, 7, 8 brauchen nicht als separate Speicher aufgebaut sein, sondern können im Prinzip auch ausgewählte Speicherbereiche innerhalb eines Gesamtspeichers sein. Ebenso ist es nicht notwendig, daß die einzelnen Speicher 2, 7, 8 räumlich innerhalb einer einzelnen Einrichtung 1 zusammengefaßt sind, sondern es kann sich auch um miteinander über entsprechende Datenleitungen oder drahtlose Übermittlungsstrecken vernetzte Speicher oder Speicherbereiche in verschiedenen Einrichtungen handeln.

Die Einrichtung weist außerdem ein Sende-/Empfangsteil bzw. Interface 11, auf, mit dem die Einrichtung 1 mit einer Ausgabeeinheit 12 des jeweiligen Benutzers kommuniziert. Über dieses Interface 11 werden die gewünschten Informationen aufgrund eines Abfragesignals AS an die Ausgabeeinheit 12 ausgegeben. Außerdem werden beispielsweise die benutzerspezifischen Auswahl- und Klassifizierungsparameter AP, KP an die Einrichtung bzw. den Parameterspeicher 8 übermittelt.

Zur Ausgabe weist im vorliegenden Ausführungsbeispiel die Ausgabeeinheit 12 ein Display 14 auf. Zur Dateneingabe, d. h. beispielsweise zur Erzeugung des Abfragesignals AS und zur Eingabe der Auswahl- und Klassifizierungsparameter AP, KP beinhaltet die Ausgabeeinheit eine integrierte Tastatur 13. Selbstverständlich kann auch jedes andere geeignete Ein- bzw. Ausgabemedium, insbesondere eine Sprachein- bzw. ausgabeeinrichtung, verwendet werden. Als Ausgabeinheit 12 kann daher im Prinzip ein beliebiger Computer, ein Terminal, ein Organizer oder ein sonstiges Gerät verwendet werden, daß die benötigten Funktionen sowie ein Interface zur Einrichtung 1 bietet.

Sämtliche Speicher 2, 7, 8 und das Interface 11 sind an eine Steuereinrichtung 10 angeschlossen, die in der Figur hier als ein Steuerblock 10 dargestellt ist. Es kann sich hierbei beispielsweise um eine CPU handeln oder auch um eine aus mehreren Einzelsteuerungen aufgebaute komplexe Steuerung. Anstelle der dargestellten einzelnen Verbindungen zwischen den Speichern 2, 7, 8, dem Interface 11 und der Steuereinrichtung 10 kann selbstverständlich auch ein gemeinsames Bussystem verwendet werden. Die Steuerung kann zum teil oder vollständig sowohl in Form von Hardware als auch in Form von Software verwirklicht sein, wobei die Softwareform in der Regel kostengünstiger und variabler ist.

Im vorliegenden Ausführungsbeispiel arbeitet die Einrichtung 1 im einzelnen nach folgendem Verfahren:
Zu Beginn einer Abfragesitzung gibt der Benutzer über seine Tastatur 13, beispielsweise über eine Menüführung auf dem Display 14 gesteuert, verschiedene Auswahlparameter AP und Klassifizierungsparameter KP ein. Diese Auswahlparameter AP entsprechen verschiedenen Themenbereichen, über die der Benutzer überhaupt Informationen haben möchte. Jedem Auswahlparameter AP ist dann ein Klassifizierungsparameter KP zugeordnet, welcher angibt, welche Informationsgenauigkeit der Benutzer über das jeweilige Thema wünscht. Beispielsweise kann der Benutzer als Auswahlparameter die Themen "Politik", "Sport" und "Reisen" angeben. Die Klassifizierungsparameter KP geben dann an, daß im Bereich "Sport" sehr detaillierte Informationen gewünscht werden und im Bereich "Politik" nur sehr oberflächliche Informationen. Weiterhin ist es natürlich möglich, daß zu jedem Auswahlparameter weitere Unterauswahlparameter existieren, so daß z. B. das Thema "Sport" auf das Thema "Fußball" oder "Eishockey" eingeschränkt werden kann, oder das Thema "Reisen" auf bestimmte Länder. Durch geeignete Wahl der Auswahlparameter AP und der Klassifizierungsparameter KP ist daher jede beliebige Struktur eingebbar, so daß beispielsweise im Gesamtthema "Reisen" nur sehr oberflächliche Informationen angeboten werden, für spezielle Reiseländer dagegen sehr viel weitergehende detaillierte Informationen. Des weiteren ist es möglich, daß die Auswahlparameter AP nicht ganze Themen, sondern bestimmte Schlüsseleigenschaften festlegen, nach denen in den einzelnen Inhalten der Informationsbausteine 3 bis 6 gesucht wird. Typische Schlüsseleigenschaften wären hierbei bestimmte Stichworte oder auch Eigenschaften wie bestimmte Motive oder stark dominierende Farben in Bildern, Durchschnittstemperaturen von verschiedenen Reiseländern oder auch die Aktualität der einzelnen Informationen.

Anhand dieser Auswahl- und Klassifizierungsparameter AP, KP werden dann mit Hilfe der Steuereinrichtung 10 aus dem Informationsdatenspeicher 2 verschiedene Informationsbausteine 3 bis 6 ausgewählt. Die Informationsbausteine 3 bis 6 sind hierbei so aufgebaut, daß bestimmte Bausteine 3 nur Überschriften enthalten, andere Bausteine 4 nur Kurzzusammenfassungen, weitere Bausteine 5 komplette ausführliche Informationstexte und weitere Bausteine 6 Zusatzinformationen wie Bilder, Tabellen, Software etc. Außerdem sollte jeder Baustein 3 bis 6 einem bestimmten Thema entsprechen.

Die Bausteine 3 bis 6 enthalten vorzugsweise in einer Kopfzeile, dem sogenannten "Reader", bestimmte Kriterien, wie den Typ und das Inhaltsthema oder die Inhaltsthemen, so daß, sofern ein Auswahlparameter AP ein passendes Inhaltsthema angibt, nicht sämtliche Informationsbausteine 3 bis 6 in ihrem kompletten Inhalt durchsucht werden müssen, sondern sofort als passend oder unpassend erkannt werden. Dies erhöht die Geschwindigkeit des Verfahrens erheblich. Es besteht außerdem die Möglichkeit, daß im Header der einzelnen Informationsbausteine bereits Stichwortlisten angeordnet sind, so daß auch eine beschleunigte Auswahl möglich ist, wenn der Auswahlparameter AP ein bestimmtes Stichwort vorgibt. Es ist selstverständlich auch möglich, den gesamten Inhalt jedes Bausteins zu durchsuchen, was dann natürlich entsprechend Zeit erfordert.

Anhand der Auswahlparameter AP werden die Informationsbausteine 3 bis 6 ausgesucht, die bevorzugt zu einer Abfrage an der Ausgabeeinheit 12 angeboten werden sollen. Bei der Auswahl der Informationsbausteine 3 bis 6 werden auch die Klassifizierungsparameter KP herangezogen. So werden z. B. von als sehr wichtig eingestuften Themen sämtliche Informationsbausteine 3 bis 6 zur bevorzugten Abfrage ausgewählt. Bei Themen, die als weniger wichtig eingestuft werden, werden automatisch nur die Informationsbausteine 3 vom Typ "Überschrift" und die Informationsbausteine 4 vom Typ "Kurzzusammenfassung" des jeweiligen Themas ausgewählt.

Jeder Informationsbaustein 3 bis 6 ist im Informationsdatenspeicher 2 unter einer bestimmten Zugriffsadresse AI bis GIII gespeichert. Die Zugriffsadressen AI bis GIII der zur bevorzugten Abfrage ausgewählten Informationsbausteine 3 bis 6 werden dann im Abfragespeicher 7 des jeweiligen Benutzers abgespeichert und untereinander in einer Abfragekaskade 9 passend miteinander verknüpft. Das heißt, es wird jeweils von einer Adresse AI bis GIII auf eine benachbarte Adresse AI bis GIII hingewiesen. Die Verknüpfung ist in der Figur anhand von Verbindungslinien zwischen den einzelnen Informationsbausteinen 3 bis 6 im Abfragespeicher 7 schematisch dargestellt.

Bei der Verknüpfung wird zum einen auf die vom Benutzer über die Klassifizierungsparameter KP vorgegebene Wichtigkeit der Informationen geachtet. Zum anderen wird auch beachtet, daß bestimmte Typen von Informationsbausteinen 3 bis 5 oberhalb von anderen Informationsbaustein-Typen 4 bis 6 innerhalb der Kaskade 9 angeordnet sind. Das heißt, in der Regel werden Informationsbausteine 3, welche nur Überschriften enthalten, in der Kaskade 9 auf einer höheren Stufe eingeordnet als Informationsbausteine 4, die kurze Zusammenfassungen über ein Thema enthalten. Die Informationsbausteine 4 mit den Kurzzusammenfassungen werden wiederum höher als die Informationsbausteine 5 mit den Volltexten innerhalb desselben Themas eingeordnet. Bei unterschiedlichen Themen verschieben sich die jeweiligen Stufen für die einzelnen Informationsbausteine 3 bis 6 dann beispielsweise in Abhängigkeit von den Klassifizierungsparametern KP. Ebenso wird bei der Verknüpfung darauf geachtet, welche Themen oder sonstige Schlüsseleigenschaften bzw. Auswahlparameter AP Ähnlichkeiten zueinander aufweisen bzw. verwandt miteinander sind, so daß hier entsprechende Querverweise gezogen werden können.

Wird nun der Informationsinhalt eines Informationsbausteins 3 bis 6, dessen Zugriffsadresse AI bis GIII im Abfragespeicher 7 gespeichert ist, auf dem Display 14 der Ausgabeeinheit 12 dargestellt, so werden automatisch für alle Informationsbausteine 3 bis 6, deren Zugriffsadresse AI bis GIII innerhalb der Abfragekaskade 9 im Abfragespeicher 7 mit der Zugriffsadresse AI bis GIII des dargestellten Informationsbausteins 3 bis 6 verbunden ist, in Form von sogenannten "Links" angeboten. Das heißt, der Benutzer wird unmittelbar auf dem Display 14 darauf hingewiesen, daß hierzu weitere Informationen existieren, und er kann über Anwahl des Links - über die jeweilige Zugriffsadresse - direkt auf den entsprechenden Informationsbaustein zugreifen, worauf ihm dann wiederum die Informationsbausteine 3 bis 6 angeboten werden, die mit diesem Informationsbaustein direkt verknüpft sind.

In dem in der Figur gezeigten Ausführungsbeispiel werden, wenn beispielsweise der Informationsbaustein 3 mit der Zugriffsadresse AI dargestellt wird, automatisch Links zu den Informationsbausteinen mit den Zugriffsadressen BI, BII und CIII angeboten. Wird dann der Informationsbaustein mit der Zugriffsadresse BII aufgerufen, so werden automatisch Links zu den Informationsbausteinen mit den Zugriffsadressen AI, BI, CIII und CII dargestellt.

Selbstverständlich ist es auch möglich, daß für einen Benutzer entsprechend seinen Auswahlparametern AP und Klassifizierungsparametern KP mehrere solcher Abfragekaskaden 9 aufgebaut werden. Diese können wiederum zu einer Kaskade zusammengefaßt sein, indem die jeweils an der obersten Stufe einer Abfragekaskade 9 stehenden Zugriffsadressen bzw. Informationsbausteine über eine gemeinsame Startmaske zusammengefaßt werden, die bei Beginn auf dem Display 14 der Ausgabeeinheit 12 des Benutzers dargestellt wird und lediglich die Verbindungen zu den einzelnen obersten Informationsbausteinen der jeweiligen Abfragekaskaden in Form von Links darstellt.

Im vorliegenden Fall ist die Steuereinrichtung 10 so aufgebaut, daß die Auswahlparameter AP und Klassifizierungsparameter KP automatisch dynamisch an das tatsächliche Abfrageverhalten des Benutzers angepaßt werden. Das heißt, daß beispielsweise bei den Themen, die vom Benutzer mit häufiger Frequenz detaillierter abgefragt werden, automatisch die Klassifizierungsparameter KP so verändert werden, daß die Wertigkeit steigt und in Zukunft gleich detaillierte Informationen angeboten werden. Ebenso können automatisch zusätzliche Auswahlparameter AP in benachbarten Gebieten hinzugefügt werden. Umgekehrt ist es selbstverständlich möglich, daß bei Themengebieten, in denen der Benutzer tatsächlich nur selten detaillierte Informationen abfragt, die Klassifizierungsparameter KP so verändert werden, daß hier weitergehende Informationen nicht mehr bevorzugt zur Abfrage angeboten werden. Ebenso hat natürlich auch der Benutzer jederzeit die Möglichkeit, diese Parameter AP, KP manuell zu ändern und somit neue Vorgaben für sein spezielles Filterprofil zu geben.

Desweiteren können die Auswahlparameter AP und Klassifizierungsparameter KP auch in Abhängigkeit von verschiedenen weiteren Informationen verändert bzw. mit diesen Informationen verknüpft werden. Weitere Informationen wären hier z. B. zeitliche Vorgaben wie Uhrzeiten, Jahreszeiten, bestimmte Daten oder Wochentage. Beispielsweise können so im Bereich "Sport" montags grundsätzlich die Informationsbausteine, die die Fußballergebnisse vom Wochenende enthalten, mit besonderer Priorität, z. B. zuerst, ausgegeben bzw. zur Ausgabe angeboten werden.

Die Auswahlparameter AP und Klassifizierungsparameter KP können weiterhin dazu genutzt werden, bei der Ausgabe der Informationen in der Ausgabeeinheit 12 bestimmte Themen, Überschriften, Stichworte etc. zu markieren, d. h. beispielsweise durch bestimmte Auswahl von Schriftgrößen, Schriftfonds, Farben oder sonstigen Animationen bzw. bei einer Sprachausgabe durch unterschiedliche Stimmlagen oder Lautstärken herauszustellen. Darüber hinausgehende Informationen werden möglichst neutral dargestellt, so daß der Nutzer sofort auf die ihn besonders interessierenden Informationsinhalte aufmerksam gemacht wird.

Beim Beenden einer Abfragesitzung werden automatisch die Inhalte des Abfragespeichers 7 gelöscht und der jeweilige Speicher 7 für andere Nutzer freigegeben. Das durch die Auswahlparameter AP und Klassifizierungsparameter KP hinterlegte benutzerspezifische Filterprofil wird jedoch im Parameterspeicher 8 gehalten, so daß bei einem erneuten Zugriff auf die Einrichtung 1 durch denselben Nutzer sofort wieder eine Abfragekaskade 9 in einem Abfragespeicher 7 entsprechend dem jeweiligen Benutzer aufgebaut wird.

Durch das erfindungsgemäße Verfahren wird der jeweilige Benutzer der Einrichtung 1 schneller und einfacher auf die ihn interessierenden Inhalte der gesamten zur Verfügung stehenden Information geleitet. Andererseits kann jeder Benutzer individuell den gewünschten Tiefgang bezüglich der relevanten Informationen auswählen. Individuell gestaltbare Profile können hinterlegt werden und dynamisch an das jeweilige Abfrageverhalten des jeweiligen Benutzers angepaßt werden.

## Patentansprüche

1. Verfahren zum Übermitteln und Ausgeben von Informationen (3 bis 6) bei dem aus einem Informationsdatenspeicher (2) auf ein Abfragesignal (AS) hin die Informationen (3 bis 6) an eine Ausgabeeinheit (12) übermittelt und dort ausgegeben werden, wobei das Abfragesignal (AS) mittels einer Signalerzeugungseinrichtung (13) erzeugt wird, welche sich in oder in unmittelbarer Nähe zu der Ausgabeeinheit (12) befindet,
wobei die Informationen (3 bis 6) in Form von Informationsbausteinen (3 bis 6) in dem Informationsdatenspeicher (2) gespeichert werden
und in einem benutzerspezifischen Parameterspeicher (7) benutzerspezifische Auswahlparameter (AP) und benutzerspezifische Klassifizierungsparameter (KP) abgespeichert werden
und in Abhängigkeit vom jeweiligen Typ und Inhalt der Informationsbausteine (3 bis 6) die jeweiligen Informationsbausteine (3 bis 6) anhand der benutzerspezifischen Auswahlparameter (AP) zur bevorzugten Abfrage ausgewählt werden
und in Abhängigkeit vom Typ und Inhalt der jeweiligen Informationsbausteine (3 bis 6) anhand der benutzerspezifischen Klassifizierungsparameter (KP) die zur bevorzugten Abfrage ausgewählten Informationsbausteine (3 bis 6) untereinander in Form einer Abfragekaskade verknüpft werden,
so daß bei einer Ausgabe eines bestimmten Informationsbausteins (3 bis 6) an der Ausgabeeinheit (12) automatisch bestimmte weitere Informationsbausteine (3 bis 6), die mit dem ausgegebenen Informationsbaustein (3 bis 6) verknüpft sind, zur Abfrage über die Ausgabeeinheit (12) angeboten werden.

2. Verfahren nach Anspruch 1, **dadurch gekennzeichnet**, daß jedem Informationsbaustein (3 bis 6) eine Zugriffsadresse (AI bis GIII) zugeordnet wird
und die Zugriffsadressen (AI bis GIII) der zur bevorzugten Abfrage ausgewählten Informationsbausteine (3 bis 6) in einem benutzerspezifischen Abfragespeicher (7) gespeichert werden und die zur bevorzugten Abfrage ausgewählten Informationsbausteine (3 bis 6) dadurch untereinander verknüpft werden, daß ihre im Abfragespeicher (7) gespeicherten Zugriffsadressen (AI bis GIII) untereinander in Form einer Abfragekaskade (9) verknüpft werden,
so daß bei einer Ausgabe des zu einer bestimmten Zugriffsadresse (AI bis GIII) gehörigen Informationsbausteins (3 bis 6) an der Ausgabeinheit (12) automatisch bestimmte weitere Informationsbausteine(3 bis 6), die eine mit dieser Zugriffsadresse (AI bis GIII) im Abfragespeicher (7) verknüpfte Zugriffsadresse (AI bis GIII) aufweisen, zur Abfrage über die Ausgabeeinheit (12) angeboten werden.

3. Verfahren nach Anspruch 1 oder 2, **dadurch gekennzeichnet**, daß die Informationsbausteine (3 bis 6) in Abhängigkeit vom Inhaltsthema und/oder von Schlüsselmerkmalen ihres Inhalts anhand der benutzerspezifischen Auswahlparameter (AP) zur bevorzugten Abfrage ausgewählt werden.

4. Verfahren nach einem der Ansprüche 1 bis 3, **dadurch gekennzeichnet**, daß die Informationsbausteine (3 bis 6) unter Berücksichtigung der benutzerspezifischen Klassifizierungsparameter (KP) zur bevorzugten Abfrage ausgewählt werden.

5. Verfahren nach einem der Ansprüche 1 bis 4, **dadurch gekennzeichnet**, daß den benutzerspezifischen Auswahlparametern (AP) jeweils benutzerspezifische Klassifizierungsparameter (KP) zugeordnet werden und in Abhängigkeit vom Informationsbaustein-Typ und/oder vom Inhaltsthema und/oder von der Häufigkeit des Auftretens der durch die Auswahlparameter gewählten Schlüsselmerkmale im Inhalt des jeweiligen Informationsbausteins (3 bis 6) und der zu den jeweiligen Auswahlparametern gehörenden Klassifizierungsparametern (KP), die Verknüpfung der Informationsbausteine (3 bis 6) und/oder der im Abfragespeicher (7) gespeicherten Zugriffsadressen (AI bis GIII) untereinander erfolgt.

6. Verfahren nach einem der Ansprüche 1 bis 5, **dadurch gekennzeichnet**, daß bei einer Ausgabe eines bestimmten Informationsbausteins (3 bis 6) an der Ausgabeinheit (12) automatisch genau die Informationsbausteine (3 bis 6) als weitere Informationsbausteine (3 bis 6) zur Abfrage über die Ausgabeeinheit (12) angeboten werden, die mit diesem Informationsbaustein (3 bis 6) unmittelbar verknüpft sind bzw. eine Zugriffsadresse (AI bis GIII) aufweisen, die mit der Zugriffsadresse (AI bis GIII) des ausgegebenen Informationsbausteins (3 bis 6) im Abfragespeicher (7) unmittelbar verknüpft ist.

7. Verfahren nach einem der vorstehenden Ansprüche, **dadurch gekennzeichnet**, daß die Auswahlparameter (AP) und/oder die Klassifizierungsparameter (KP) im benutzerspezifischen Parameterspeicher (8) während und/oder nach einer Abfragesitzung des jeweiligen Benutzers automatisch modifiziert werden.

8. Verfahren nach einem der vorstehenden Ansprüche, **dadurch gekennzeichnet**, daß die Auswahlparameter (AP) und/oder die Klassifizierungsparameter (KP) in Abhängigkeit von zeitabhängigen Parametern automatisch modifiziert werden und/oder die Auswahl der zur bevorzugten Abfrage angebotenen Informationsbausteine (3 bis 6) und/oder deren Verknüpfung bzw. die Verknüpfung der zugehörigen Zugriffsadressen (AI bis GIII) unter Berücksichtigung der zeitabhängigen Parameter erfolgt.

9. Verfahren nach Anspruch 8, **dadurch gekennzeichnet**, daß die Modifizierung der Auswahlparameter (AP) und/oder der Klassifizierungsparameter (KP) in Abhängigkeit von der Häufigkeit der Abfrage bestimmter Informationsinhalte erfolgt.

10. Verfahren nach einem der vorstehenden Ansprüche, **dadurch gekennzeichnet**, daß der zu einem Nutzer gehörige Abfragespeicher (7) mit den Zugriffsadressen (AI bis GIII) nach Beenden einer Abfragesitzung des Nutzers automatisch gelöscht wird
und bei Beginn einer neuen Sitzung des Nutzers, anhand der im benutzerspezifischen Parameterspeicher (8) gespeicherten Auswahlparameter (AP) und optional der Klassifizierungsparameter (KP) und optional der zeitabhängigen Parameter, Informationsbausteine (3 bis 6) ausgewählt
und deren Zugriffsadressen (AI bis GIII) in einem benutzerspezifischen Abfragespeicher (7) gespeichert werden
und die im Abfragespeicher (7) gespeicherten Zugriffsadressen (AI bis GIII) anhand der Klassifizierungsparameter (KP) und optional der zeitabhängigen Parameter untereinander verknüpft werden.

11. Verfahren nach einem der vorstehenden Ansprüche, **dadurch gekennzeichnet**, daß die in dem zu einem Nutzer gehörigen Abfragespeicher (7) gespeicherten Zugriffsadressen (AI bis GIII) und/oder deren Verknüpfungen bei einer Veränderung der Inhalte der zugehörigen Informationsbausteine (3 bis 6) entsprechend modifiziert werden.

12. Verfahren nach einem der vorstehenden Ansprüche, **dadurch gekennzeichnet**, daß in Abhängigkeit von den Auswahl- und/oder Klassifizierungsparametern (AP, KP) bestimmte Informationsbausteine (3 bis 6) bzw. bestimmte Schlüsselmerkmale innerhalb eines Informationsbausteins (3 bis 6) bei der Ausgabe bezüglich der übrigen ausgegebenen Informationen markiert werden.

13. Einrichtung zur Durchführung eines Verfahrens gemäß einem der vorstehenden Ansprüche,
mit Mitteln (11) zum Empfang eines Abfragesignals (AS),
mit Mitteln (11) zur Übermittlung bestimmter Informationen (3 bis 6) an eine Ausgabeeinheit (12) aufgrund des Abfragesignals (AS),
mit Mitteln (11) zum Empfang von benutzerspezifischen Auswahlparametern (AP) und benutzerspezifischen Klassifizierungsparametern (KP),
mit einem benutzerspezifischen Parameterspeicher (8) zum Speichern der Auswahlparameter (AP) und der Klassifizierungsparameter (KP),
mit einem Informationsdatenspeicher (2), welcher Informationen in Form von Informationsbausteinen (3 bis 6) enthält, und/oder mit einer Empfangseinrichtung zum Empfang solcher Informationsbausteine(3 bis 6),
mit Mitteln (10) zur Auswahl von bestimmten Informationsbausteinen (3 bis 6) zur bevorzugten Abfrage durch den jeweiligen Nutzer, in Abhängigkeit vom jeweiligen Typ und/oder Inhalt der Informationsbausteine (3 bis 6) und anhand der benutzerspezifischen Auswahlparameter (AP),
und mit Mitteln (10) zum Verknüpfen der zur bevorzugten Abfrage ausgewählten Informationsbausteine (3 bis 6) untereinander in Abhängigkeit vom Typ und Inhalt der jeweiligen Informationsbausteine (3 bis 6) und/oder anhand der benutzerspezifischen Klassifizierungsparameter (KP) in Form einer Abfragekaskade,
so daß bei einer Ausgabe eines bestimmten Informationsbausteins (3 bis 6) an der Ausgabeeinheit (12) automatisch bestimmte weitere Informationsbausteine(3 bis 6), die mit dem ausgegebenen Informationsbaustein (3 bis 6) verknüpft sind, zur Abfrage über die Ausgabeeinheit (12) angeboten werden.

14. Einrichtung nach Anspruch 13, **dadurch gekennzeichnet**, daß jedem Informationsbaustein (3 bis 6) eine Zugriffsadresse (AI bis GIII) zugeordnet wird,
und die Einrichtung (1) einen benutzerspezifischen Abfragespeicher (7) zum Speichern der Zugriffsadressen (AI bis GIII) der zur bevorzugten Abfrage ausgewählten Informationsbausteine (3 bis 6)
und Mittel (10) zum Verknüpfen der im Abfragespeicher (7) gespeicherten Zugriffsadressen (AI bis GIII) untereinander in Form einer Abfragekaskade (9) aufweist,
so daß bei einer Ausgabe des zu einer bestimmten Zugriffsadresse (AI bis GIII) gehörigen Informationsbausteins (3 bis 6) an der Ausgabeeinheit (12) automatisch bestimmte weitere Informationsbausteine(3 bis 6), die eine mit dieser Zugriffsadresse (AI bis GIII) im Auswahlspeicher (7) verknüpfte Zugriffsadresse (AI bis GIII) aufweisen, zur Abfrage über die Ausgabeeinheit (12) angeboten werden.
